# EUROPEAN PATENT SPECIFICATION

(11) **EP 2 088 736 B1**
(45) Date of publication and mention of the grant of the patent: **03.10.2018**
(21) Application number: 08101356.7
(22) Date of filing: 07.02.2008
(51) Int. Cl.: H04L 29/06

(54) **A method for establishing a connection between a client and a server as well as a client and a server for establishing such connection**
Ein Verfahren zur Herstellung einer Verbindung zwischen einem Client und einem Server und ein Client und ein Server zur Herstellung dieser Verbindung
Procédé d'établissement de connexion entre un client et un serveur, client et serveur pour établir une telle connexion

(43) Date of publication of application: 12.08.2009
(73) Proprietor: PDM Software ApS, 9220 Aalborg Ost (DK)
(72) Inventor: Nielsen, Rune Colomann, DK-9000 Aalborg (DK); Thomsen, Jesper, DK-9900 Frederikshavn (DK)
(74) Representative: Plougmann Vingtoft a/s

(56) References cited:
- WO-A-02/15529
- US-A1- 2002 107 910
- US-A1- 2004 019 682

## Description

### FIELD OF THE INVENTION

The invention relates to a method for establishing a connection between a client and a server, an in particular for establishing a connection between a client application and a server application. The invention also relates to a client and a server for establishing a connection.

### BACKGROUND OF THE INVENTION

US 2004/0076121 discloses an Internet communication method. The method is a bidirectional communication on the Internet between a user of a virtual IP address and a user of a real IP address. The method involves forming a client address information table by means of mapping, as a pair, an Internet protocol address (server-recognized IP address) obtained through a network socket and Internet protocol addresses (client-notified IP address) notified of directly by respective clients. Upon receiving a signal asking for an Internet protocol address of a corresponding client to be connected from a client terminal, the server-recognized IP address and the client-notified IP address of the corresponding client are read from said client address information table, which are then provided to the client terminal. Accordingly, by means of running a connection by differentiating the client terminals having a real IP addresses from the client terminals having a virtual IP addresses, the method allows a user of the real IP address to call a user of the virtual IP address.

US 2004/019682 discloses sending a callback request by a requesting device to a receiving device, wherein the callback request includes a destination address and a port on the requesting device. A new connection is established between the receiving device and the requesting device by using the destination address and port included in the request.

US 2002/107910 discloses receiving a polling request by a communication server from a communication client. In response to the polling request from the communication client, the communication server sends back any application message data intended for any of the clients of applications that are associated with the polling communication client. Upon receiving notification message data, the communication client parses the data and distributes them to the intended clients of applications.

WO 02/15529 discloses implementing a server driven "push" technology. Once a client establishes a connection to a server, the server is responsible for maintaining or keeping the connection alive by periodically sending a "No Message" flag, wherein the initial request to establish connection includes an identifier that uniquely represents the current client application. When the server needs to send information to the client (i. e., substantive information/message content at the server), the server sends a "Message Pending" flag along the already established and currently maintained connection.

The above method of US 2004/0076121 involves the disadvantage that each and every application of the client needs to have a dedicated and individual IP address. If more instances of a multi-user application of the server are to be running on the same client having different applications, the server, which the client is calling, and where each application wants to run an instance of a multi-user application of the server at the same time, can only differentiate between the different applications of the client, if each and every application of the client has a dedicated and individual IP address.

### SUMMARY OF THE INVENTION

It may be seen as an object of the present invention to provide a possibility of instances of a multi-user application of a server running at the same time on the same server, without the server having any knowledge of IP addresses or other dedicated and individual identification of the different applications of the client, said different applications of the client each wanting to run an instance of a multi-user application of the server.

The present invention defines a method according to claim 1 and corresponding interrelated apparatuses according to claims 11 (client) and 12 (server). Further embodiments are set forth in the dependent claims 2-10.

The method according to the invention results in the possibility of running more than one user application of the same server, even if the client only can be identified by one IP-address or other singular means of addressing the client. Such method of running multi-user applications is opposite to known methods of identifying multi-user applications of a client, and is also contradictory to the teaching of a person skilled in the art.

A data storage being common for the multi-user application results in a dedicated storage media being suitable for all users of the multi-user application and being easily and readily accessible through a wired or wireless connection between the client and the server.

According to one aspect of the invention, the connection is established between the instance of the multi-user application and the second application providing exchange of data between the instance and the second application. Establishing the connection between the instance of the multi-user application and the second application results in the user application being able to obtain connection with a particular instance of the server.

According to another aspect of the invention, the first application is unable to communicate an identity of the instance to the second application. Such scenario may be present and may pose problems in the communication. However, according to the present invention a virtual server function, within the client configuration, is applied to the second application and a virtual client function, within the server configuration, is applied to the multi-user application.

An IP address or a communication port address may seem obvious to utilise. However, when an application of the client is to run a multi-user application, the person skilled in the art will provide the user application with an individual IP address. However, contrary hereto, according to the invention, this is not the case, when running instances of a multi-user application of the server by an application of the client.

According to an aspect of the invention, the data storage consists of at least one. possibly more, of the following data storage media: a disc-drive, a flash-memory or a random access memory (RAM). The choice of common data storage depends on the amount of data to be stored, the kind of data to be stored, and also depends on the communication system between the server and the client.

An aspect of the invention may relate to a client according to independent claim 11.

The client aspect of the invention results in the advantage of different instances of the client running a multi-user application of the server even though the different multi-user applications of the server cannot differentiate between different instances of the client.

An aspect of the invention may alternatively or additionally relate to a server according to independent claim 12.

The multi-user application of the server may comprise at least one of the following operating systems: various versions of Microsoft Corporation's Windows operating systems, various versions of Apple Corporation's Macintosh operating systems, workstation computers running any of a variety of commercially-available UNIX or UNIX-like operating systems including the variety of GNU/Linux operating systems.

The multi-user application of the server may comprise at least one of the following multi-user applications: a word-processing system such as Word, a spread-sheet system such as Excel, a web browser application such as Explorer, a presentation program such as PowerPoint, or a Product Lifecycle Management (PLM) graphical computer programme such as Computer Aided Design (CAD) or Computer-Aided Design and Drafting (CADD), or Computer-Aided Industrial Design (CAID) or Computer-Aided Architectural Design (CAAD) or a non-graphical computer-aided design such as Knowledge-Based Engineering (KBE).

The one or more second applications of the client may comprise at least one of the following applications: a client application, a web browser, a mid-tier application, or a Database Management System (DBMS).

The communication network between the server and the client, or between the server and the common data storage and the between the common data storage and the client may be at least one of the following networks: a local area network (LAN), such as an Ethernet network, a Token-Ring network; a wide-area network (WAN); a virtual network such as a virtual private network (VPN), the Internet; an intranet; an extranet; a public switched telephone network (PSTN), a public land mobile network (PLMN), an infra-red network, a wireless network such as a network operating under any of the IEEE 802.11 suite of protocols, the Bluetooth protocol, other wireless protocols, and/or any combination of these and/or other networks.

An interface between the server and the client or between the server and the common data storage and between the common data storage and the client may be at least one of the following interface modes: a Graphical User Interface (GUI), a voice interface, a text-based interface or a handwriting-based interface.

The interface mode of the server and/or of the client may be supported for execution on at least one of the following devices: a mobile phone, a Personal Digital Assistant (PDA) or personal computer (PC).

The server may include database servers such as servers available from IBM, Oracle, Microsoft, Sybase, IBM, which can process requests from clients running an application.

The client aspect and the server aspect of the invention results in the advantage of different instances of the client running a multi-user application of the server even though the different instances of a multi-user application of the server cannot differentiate between different instances of the client, and vice versa, different instances of the server connecting to different instances of the client even though the different instances of the server cannot differentiate between different instances of the client.

### BRIEF DESCRIPTION OF THE FIGURES

The invention will hereafter be described with reference to the drawings, where
Fig. 1 schematically shows a known client-server network configuration according to the prior art,
Fig. 2 schematically shows a client-server network configuration according to the present invention, and
Fig. 3 schematically shows a flow diagram for a method according to the invention.

### DETAILED DESCRIPTION OF THE INVENTION

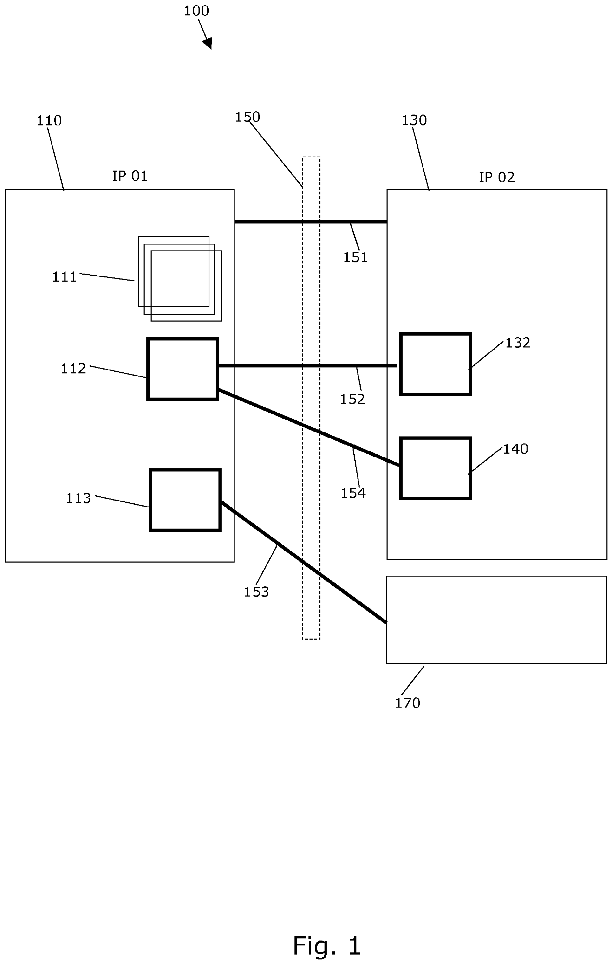

Fig. 1 shows a commonly known client-server network configuration 100 for illustration of how to connect a client application to a server application. The client-server network configuration 100 comprises a server 110 and a client 130. The server 110 and the client 130 are connected to a network 150, for example a Wide Area Network (WAN) such as the Internet or a Local Area Network (LAN). The server and the client may be connected via other types of networks which may be a wired network or a wire-less network.

The address of the server 110 in the network 150 is IP01 and the address of the client 130 in the network 150 is IP02. The addresses may be Internet addresses or other addresses identifying the location of the server and of the client in the network 150.

The client 130 is connected to the server 110 via the IP connection 151. The server supports running of instances of a multi-user application 111, for example a first instance 112 and a second instance 113. The denoting first and second is not to be construed as a ranking or prioritising of the first application 112 and the second application 113, only as a means for differentiating between the one application 112 and the other application 113. Instances of the multi-user application 111 are to be understood as active executions of the program-code comprised by the multi-user application 111.

The client 130 supports running a first application 132, for example a user interface, and a second application 140, for example a Computer Aided Design (CAD) application, word processing application, spread sheet application, graphical presentation application, image processing technology and/or even further applications to be performed in an electronic computer system environment and network.

In the following, the first application 132 will be referred to as the user interface 132 and the second application 140 will be referred to as the CAD application 140. However, it should be understood that the first application 132 and the second application 140 may be any applications, which the client supports running on the client.

The first instance 112 of the multi-user application 111, for example a database program such as Navision, may have been running upon request from a user of the client 130 via the IP connection 151 or upon request from any application running on the client 110. The user can access the instance 112 via a user interface 132 running on the client 130. The user interface 132 can be regarded as part of the instance 112. Therefore, the first instance 112 is running in two domains having different addresses, that is, addresses IP01 and IP02. The first instance 112 and user interface 132 communicates via connection 152.

The client 130 may be a single-user computer having only one user, or the client 130 may be connected with a number of other single-user computers.

Furthermore, the client-server network 100 may comprise more clients 170, each of said more clients 170 as example running other applications that are capable of communicating with other instances 113 via the connection 153.

The user interface 132 may be distributed via a user interface distribution program, for example Citrix. The technical feature of the user interface 132 and the distribution programme associated herewith is to distribute a graphical interface and possibly also enabling keyboard- and/or mouse-activated commands into the user interface.

The CAD application 140 is capable of connecting to the server 110 by calling the address IP01. After establishing the connection 154 to the server 110, the CAD application is capable of exchanging data with any instance of the multi-user application 111, for example the first instance 112, the second instance 113 or other instances.

In the configuration shown, it is to be understood that the CAD application 140 intends to exchange data with a particular instance 112, because the CAD application 140 is required to connect to the same instance 112 as the user interface 132 is connected with.

However, in the configuration shown, the CAD application 140 is unable to determine whether the CAD application should connect to the first instance 112, the second instance 113 or other instances 111 of the multi-user application.

Problems arise since the user interface 132 is not able to provide any information about the identity of the instance 112 to which the user interface 132 is connected. Accordingly, the user interface 132 cannot communicate the identity, for example an IP address, to the CAD application 140.

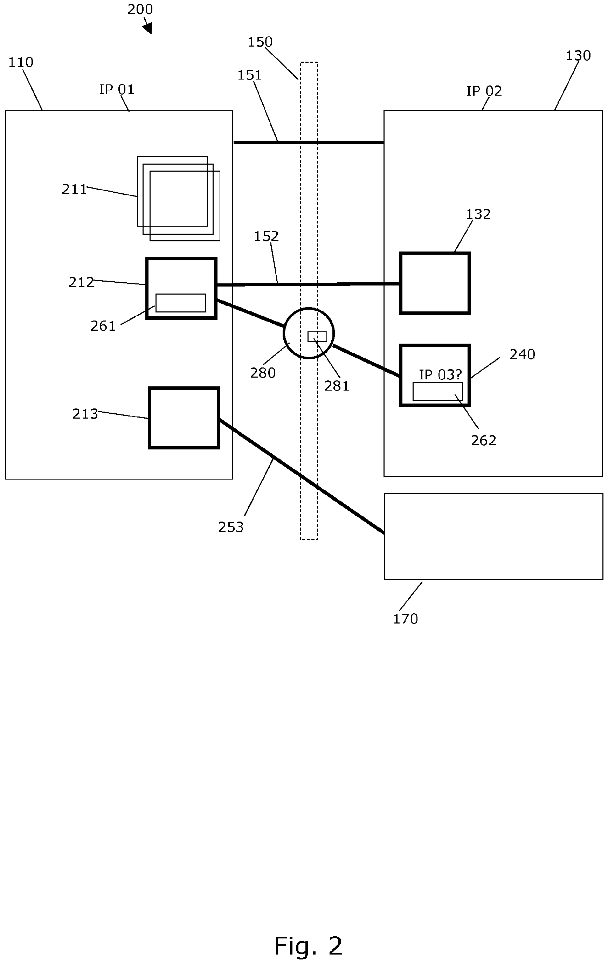

Fig. 2 shows a client-server network configuration according to the invention and comprising a server 110 and a client 130, said server 110 and said client 130 being identifiable via respective addresses IP01 and IP02. In relation to the different elements in Fig. 2, the elements having the same reference sign as the corresponding elements in Fig. 1, the description of Fig. 1 applies equally. Thus, the description of Fig. 1 is hereby incorporated by reference into the description of Fig. 2, in the event a reference number of an element in Fig. 2 is the same as a corresponding reference number of Fig. 1

Furthermore, apart from some additional functionalities, the function of the multi-user application 211, the first instance 212, the second instance 213 and the CAD application 240, corresponds, respectively, to the multi-user application 111, the first instance 112, the second instance 113 and the CAD application 140 of Fig. 1.

The client 130 processes a second application 240, for example a CAD application 240. In the following the second application 240 will be referred to as a CAD application 240.

The CAD application 240 may be required to, for example, exchange data with a particular instance 212 of a multi-user application 211 running on the server 110. For example, since the user interface 132 communicates with the particular instance 212, the CAD application 240 is required also to communicate with the same particular instance 212.

Even though the user interface 132 is connected with or is part of the instance 212, the user interface 132 is unable to communicate an identity of the instance 212 to the CAD application 240. Accordingly, the CAD application 240 is unable to directly request connection to a particular instance 212.

However, as will be described in the following, it is possible for the CAD application 240 to obtain connection with a particular instance 212 by applying a virtual server function 262, within the client configuration 130, to the CAD application 240 and by applying a virtual client function 261, within the server configuration 110, to the multi-user application 211.

In order for the CAD application 240 to obtain connection with a particular instance 212 of the server 110, the CAD application writes an address 281 to a data storage 280. The address may be the IP address IP02 of the client 130 or the address may be an IP address IP03 of the CAD application 240. The data storage 280 may be a disc-drive, a flash-memory, a random access memory (RAM) or other data storage device connected to the client 130, to the server 110 or otherwise connected to the network 150.

The data storage 280 must be a common data storage 280 (possibly known as a Named Shared Memory) accessible for the multi-user application 211 (or any of its instances 212, 213) and accessible for the CAD application 240. Alternatively or additionally the common data storage 280 is accessible for the client 130 and the sever 110.

The writing of an IP address of the instance to the data storage 280 by the CAD application 240 may comprise writing, to the data storage 280, a data file containing the address, or changing a flag, e.g. a number in a data-register, or by means of Named Shared Memory creating a data file, thereby making the instance 211 aware of a request from the CAD application 240, said request requesting the instance 211 to connect to a particular address.

The data storage 280 may be a common data storage 280 which is available both for applications running on the server 110 and for applications running on the client 130. The common data storage 280 is connected to the server and the client via a Named Shared Memory.

After the CAD application 240 has written an address to the data storage 280, the CAD application 240 is set to a wait-state where the CAD application 240 waits for a call from the server 110. It is characteristic that in the wait-state the CAD application 240 virtually acts as a server 262 and actually does not act as a client, although being an instance running on a client 130 according to the in the network configuration 100.

The multi-user application 211 and, accordingly, the first instance 212 is arranged to read from the data storage 280. That is, the first instance 212 may read from the data storage 280 either continuously, or at particular instances or otherwise being controlled to read data from the storage 280. The frequency of the first instance reading from the data storage 280 depends on the need or the wish for speed of electronic communication. Reading may be set to a frequency of every one minute or reading may be set to a frequency of every second. Reading may be altered depending on the the time of day. Reading at a higher frequency may possibly be applied when transmission rates are cheaper during some parts of the day than during other parts of the day. Alternatively or additionally, reading at a higher frequency may possibly be applied when transmission speeds are lower during some parts of the day than during other parts of the day.

At some point in time, the first instance 212 reads the address previously having been written to the data storage 280 by the CAD application 240.

After the first instance 212 has read the address of the CAD application 240, the first instance 212 connects to the virtual server 262 of the CAD application 240. Thereby, connection is established between the first instance 212 and the CAD application 240. It is characteristic that in the connection-state, by the act of the first instance 212 connecting to the CAD application 240, the first instance 212 virtually acts as a client 261 and actually does not act as a server, although being an instance running on a server 110 according to the network configuration 100.

Thus, instead of having the CAD application 240 establishing the connection to the first instance 212, the first instance 212 establishes the connection to the CAD application 240 via the address of the CAD application previously having been written to the data storage 280.

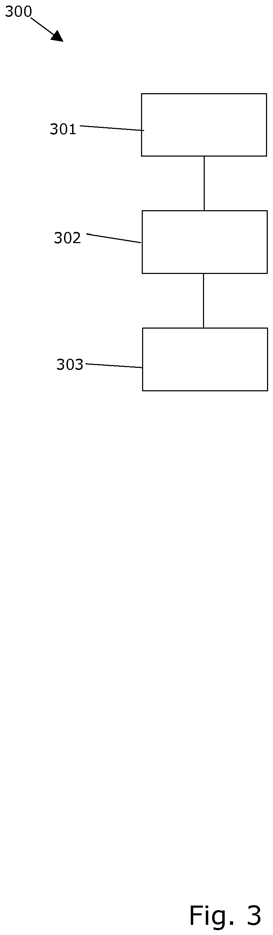

Figure 3 shows steps of a method by means of the invention for establishing connection between the CAD application 240 and the first instance 212.

In step 301, the CAD application 240 writes an address 281 to the data storage 280. After writing the address 281 to the data storage 280, the CAD application 240 acts as a server 262 waiting for a call from the first instance 212 running on the server 110.

Thus, according to the network configuration 100, it seems as if a server 262 of the CAD application 240 is waiting for a call from another server 110 of the network configuration. Such set-up is in itself contradictory according to common known network configurations.

In step 302, however, the first instance 212 reads the address 281 previously having been written to the data storage 280 by the CAD application 240. During reading, the first instance 212 acts as a client 261 calling the address of CAD application 240, said CAD application 240 running on the client 130.

Thus, according to the network configuration 100, it seems as if a client 261 of the first instance 212 is reading an address of another client 262 of the network configuration. Such set-up is in itself contradictory according to common known network configurations.

During reading the address 281, the first instance reads from the data storage 280 by reading continuously, or at predetermined times, or at times determined otherwise.

In step 303, the virtual client 261 of first instance 212 establishes connection to the virtual server 262 of the CAD application 240 by calling the address 281, thereby establishing connection between the first instance 212 and the CAD application 240.

Subsequent to step 303 having been completed, the CAD application 240 is able to exchange data with the first instance 212, said first instance 212 being the same instance 212 being connected with the user interface 132 of the client 130.

The aforementioned aspects of the present invention are meant to be examples. The present invention is defined by the appended independent claims, and advantageous embodiments of the present invention are described in the dependent claims.

## Claims

1. A method for establishing connection between a client (130) and a server (110), the server supporting running at least a first instance (212) and a second instance (213) of a multi-user application (211), and the client supporting running at least a first application (132) and a second application (240), wherein the first application (132) supports interfacing the first instance (212), wherein the first application (132) is connected to the first instance (212) via a connection (152), and wherein a common data storage (280) is connected to the server (110) and the client (130), where the common data storage (280) is accessible for the multi-user application (211) and for the second application (240), the method comprising the steps of:
- based on a request from a user of the client (130) via an IP connection (151) or on a request from any application (132) running on the client (130), request the first instance (212) to run, whereby the first application (132) becomes a part of the first instance (212) and the first instance (212) is running on the server (110) and on the client (130), the client having a client address (IP02),
- the second application (240) writing an address (281) to the common data storage (280), wherein the writing makes the first instance (212) aware of a request from the second application (240) to connect to the written address,
- said address (281) being a communication port address of a communication port of the client or said address (281) being an IP address (IP03) of the second application (240), and the second application (240) being unable to request connection to the first instance (212),
- arranging the first instance (212) to read from the common data storage (280),
- applying a virtual server function (262) within a client configuration (130) to the second application (240) and applying a virtual client function (261) within a server configuration (110) to the multi-user application (211),
- the virtual server function (262) of the second application (240) waiting for a call from the server (110),
- the virtual client function (261) of the first instance (212) reading the address (281) from the common data storage (280),
- the virtual client function (261) of the first instance (212) connecting to the virtual server function (262) by calling the address (281),
- said calling by the first instance (212) thereby establishing connection between the second application (240) running on the client (130) and the first instance (212) running on the server.

2. A method according to claim 1, wherein the connection being established between the first instance (212) of the multi-user application and the second application (240) providing exchange of data between the first instance (212) and the second application (240).

3. A method according to claim 1, wherein the first application (132) is unable to communicate an identity of the first instance (212) to the second application (240).

4. A method according to claim 1, where the data storage consists of at least one of the following data storage media, possibly consist of more than one of the following data storage media: a disk drive, an optical storage device, a flash-memory, solid state storage devices such as a random access memory, RAM, or read-only memory, ROM.

5. A method according to claim 1, where the multi-user application of the server comprises at least one of the following operating systems: various versions of Microsoft Corporation's Windows operating systems, various versions of Apple Corporation's Macintosh operating systems, workstation computers running any of a variety of commercially-available UNIX or UNIX-like operating systems including the variety of GNU/Linux operating systems.

6. A method according to claim 1, where the multi-user application of the server comprises at least one of the following multi-user applications: a word-processing system such as Word, a spread-sheet system such as Excel, a web browser application such as Explorer, a presentation program such as PowerPoint.

7. A method according to claim 1, where one or more of the second applications of the client comprises at least one of the following applications: a client application, a web browser, a mid-tier application, or a Relation Database Management System, RDBMS.

8. A method according to claim 1, where a communication network between the server and the client, or between the server and the common data storage and between the common data storage and the client is at least one of the following networks: a local area network, LAN, such as an Ethernet network, a Token-Ring network; a wide-area network, WAN; a virtual network such as a virtual private network, VPN, the Internet; an intranet; an extranet; a public switched telephone network, PSTN, a public land mobile network, PLMN, an infra-red network, a wireless network such as a network operating under any of the IEEE 802.11 suite of protocols, the Bluetooth protocol, other wireless protocols, and/or any combination of these and/or other networks.

9. A method according to claim 1, where an interface between the server and the client or between the server and the common data storage and between the common data storage and the client is at least one of the following interface modes: a Graphical User Interface, GUI, a voice interface, a text-based interface or a handwriting-based interface.

10. A method according to claim 1, where an interface mode of the server and/or of the client is supported for execution on at least one of the following devices: a mobile phone, a Personal Digital Assistant, PDA, or personal computer, PC.

11. A client (130) for running at least a first application (132) and a second application (240) and for connecting with a server (110) supporting running at least a first (212) and a second instance (213) of a multi-user application (211), wherein the first application (132) supports interfacing the first instance (212), wherein the first application (132) is connectable to the first instance (212) via a connection (152), wherein the first instance (212) has been requested to run based on a request from a user of the client (130) via an IP connection (151) or on a request from any application (132) running on the client (130), whereby the first application (132) becomes a part of the first instance (212) and the first instance (212) is running on the server (110) and on the client (130), the client having a client address (IP02), wherein a virtual client function (261) is applied within a server configuration (110) to the multi-user application (211), and wherein a common data storage (280) is connected to the server (110) and the client (130), where the common data storage (280) is accessible for the multi-user application (211) and for the second application (240), and wherein the first instance (212) is arranged to read from the common data storage (280), said client comprising
- a virtual server function (262) applicable within a client configuration (130) to the second application (240), wherein
- the second application (240) is intended for and capable of initially writing an address (281) to the common data storage (280) and subsequently waiting for a call from the server (110) via the virtual server function (262), wherein the writing makes the instance (212) aware of a request from the second application (240) to connect to the written address (281),
- said address (281) is a communication port address of a communication port of the client or said address (281) is an IP address (IP03) of the second application (240), and the second application being unable to request connection to the first instance (212),
- said virtual server function (262) applied to the second application (240) intended for and capable of subsequently receiving a call from the first instance (212), said virtual client function (261) of the first instance (212) having read the address (281) from the common data storage (280) prior to calling the address (281), where the virtual client function (261) of the first instance (212) is arranged to connect to the virtual server function (262) by calling the address (281), and
- said receiving of the call enabling establishment of a connection from the second application (240), running on the client (130), to the first instance (212), running on the server.

12. A server (110) for running at least a first instance (212) and a second instance (213) of a multi-user application (211) and for connecting with a client (130) supporting running at least a first application (132) and a second application (240), wherein the first application (132) supports interfacing the first instance (212), and wherein the first application (132) is connectable to the first instance (212) via a connection (152), wherein the first instance (212) has been requested to run based on a request from a user of the client (130) via an IP connection (151) or on a request from any application (132) running on the client (130), whereby the first application (132) becomes a part of the first instance (212) and the first instance (212) is running on the server (110) and on the client (130), the client having address a client address (IP02), wherein a common data storage (280) is connectable to the server (110) and the client (130), where the common data storage (280) is accessible for the multi-user application (211) and for the second application (240) and wherein a virtual server function (262) is applied within a client configuration (130) to the second application (240), said server comprising
- a virtual client function (261) applicable within a server configuration (110) to the multi-user application (211), wherein
- the first instance (212) is arranged for reading an address (281) from the common data storage (280), said address (281) previously having been written to the common data storage (280) by the second application (240), and said address (281) being a communication port address of a communication port of the client or said address (281) being an IP address (IP03) of the second application (240), and the second application (240) being unable to request connection to the first instance (212), and wherein the writing of said address (281) makes the first instance (212) aware of a request from the second application (240) to connect to the written address (281),
- said virtual client function (261) of the first instance (212) is intended for and capable of connecting to the virtual server function (262) by reading and calling the address (281), and
- said calling of the address (281) establishing connection from the second application (240) running on the client (130) to the first instance (212) running on the server.

## Patentansprüche

1. Verfahren zum Herstellen einer Verbindung zwischen einem Client (130) und einem Server (110), wobei der Server ein Ausführen von zumindest einer ersten Instanz (212) und einer zweiten Instanz (213) einer Mehrbenutzeranwendung (211) unterstützt und der Client ein Ausführen von zumindest einer ersten Anwendung (132) und einer zweiten Anwendung (240) unterstützt, wobei die erste Anwendung (132) ein Anbinden der ersten Instanz (212) unterstützt, wobei die erste Anwendung (132) mit der ersten Instanz (212) über eine Verbindung (152) verbunden ist, und wobei ein gemeinsamer Datenspeicher (280) mit dem Server (110) und dem Client (130) verbunden ist, wobei auf den gemeinsamen Datenspeicher (280) durch die Mehrbenutzeranwendung (211) und durch die zweite Anwendung (240) zugegriffen werden kann, wobei das Verfahren die folgenden Schritte umfasst:
- auf Grundlage einer Aufforderung von einem Benutzer des Clients (130) über eine IP-Verbindung (151) oder einer Aufforderung von einer beliebigen Anwendung (132), die auf dem Client (130) ausgeführt wird, die erste Instanz (212) aufzufordern ausgeführt zu werden, wodurch die erste Anwendung (132) zu einem Teil der ersten Instanz (212) wird und die erste Instanz (212) auf dem Server (110) und auf dem Client (130) ausgeführt wird, wobei der Client eine Client-Adresse (IP02) aufweist,
- Schreiben, durch die zweiten Anwendung (240), einer Adresse (281) in den gemeinsamen Datenspeicher (280), wobei das Schreiben der ersten Instanz (212) eine Aufforderung von der zweiten Anwendung (240), sich mit der geschriebenen Adresse zu verbinden, zur Kenntnis bringt,
- wobei die Adresse (281) eine Kommunikationsanschlussadresse eines Kommunikationsanschlusses des Clients ist oder die Adresse (281) eine IP-Adresse (IP03) der zweiten Anwendung (240) ist und die zweite Anwendung (240) nicht in der Lage ist, eine Verbindung mit der ersten Instanz (212) anzufordern,
- Anordnen der ersten Instanz (212), um aus dem gemeinsamen Datenspeicher (280) zu lesen,
- Anwenden einer virtuellen Server-Funktion (262) innerhalb einer Client-Konfiguration (130) auf die zweite Anwendung (240) und Anwenden einer virtuellen Client-Funktion (261) innerhalb einer Server-Konfiguration (110) auf die Mehrbenutzeranwendung (211),
- wobei die virtuelle Server-Funktion (262) der zweiten Anwendung (240) auf einen Ruf von dem Server (110) wartet,
- wobei die virtuelle Client-Funktion (261) der ersten Instanz (212) die Adresse (281) aus dem gemeinsamen Datenspeicher (280) liest,
- wobei sich die virtuelle Client-Funktion (261) der ersten Instanz (212) mit der virtuellen Server-Funktion (262) durch Aufrufen der Adresse (281) verbindet,
- wodurch das Aufrufen durch die erste Instanz (212) eine Verbindung zwischen der zweiten Anwendung (240), die auf dem Client (130) ausgeführt wird, und der ersten Instanz (212), die auf dem Server ausgeführt wird, herstellt.

2. Verfahren nach Anspruch 1, wobei die Verbindung, die zwischen der ersten Instanz (212) der Mehrbenutzeranwendung und der zweiten Anwendung (240) hergestellt ist, einen Austausch von Daten zwischen der ersten Instanz (212) und der zweiten Anwendung (240) bereitstellt.

3. Verfahren nach Anspruch 1, wobei die erste Anwendung (132) nicht in der Lage ist, eine Identität der ersten Instanz (212) an die zweite Anwendung (240) zu kommunizieren.

4. Verfahren nach Anspruch 1, wobei der Datenspeicher aus zumindest einem der folgenden Datenspeichermedien besteht, möglicherweise aus mehr als einem der folgenden Datenspeichermedien besteht: ein Plattenlaufwerk, eine optische Speichervorrichtung, ein Flash-Speicher, Solid-State-Speichervorrichtungen wie etwa ein Direktzugriffsspeicher, RAM, oder ein Nur-Lese-Speicher, ROM.

5. Verfahren nach Anspruch 1, wobei die Mehrbenutzeranwendung des Servers zumindest eines der folgenden Betriebssysteme umfasst: verschiedene Versionen von Windows-Betriebssystemen der Microsoft Corporation, verschiedene Versionen von Macintosh-Betriebssystemen der Apple Corporation, Workstation-Computer, die eine beliebiges aus einer Vielzahl von handelsüblichen UNIX- oder UNIX-ähnlichen Betriebssystemen ausführen, einschließlich der Vielzahl von GNU/Linux-Betriebssystemen.

6. Verfahren nach Anspruch 1, wobei die Mehrbenutzeranwendung des Servers zumindest einer der folgenden Mehrbenutzeranwendungen umfasst: ein Textverarbeitungssystem wie etwa Word, ein Tabellenkalkulationssystem wie etwa Excel, eine Web-Browser-Anwendung wie etwa Explorer, ein Präsentationsprogramm wie etwa PowerPoint.

7. Verfahren nach Anspruch 1, wobei eine oder mehrere der zweiten Anwendungen des Clients zumindest eine der folgenden Anwendungen umfassen: eine Client-Anwendung, einen Web-Browser, eine Mid-Tier-Anwendung oder ein Relation Database Management System, RDBMS.

8. Verfahren nach Anspruch 1, wobei ein Kommunikationsnetzwerk zwischen dem Server und dem Client oder zwischen dem Server und dem gemeinsamen Datenspeicher und zwischen dem gemeinsamen Datenspeicher und dem Client zumindest eines der folgenden Netzwerke ist: ein lokales Netzwerk, LAN, wie etwa ein Ethernet-Netzwerk, ein Token-Ring-Netzwerk; ein Weitverkehrsnetz, WAN; ein virtuelles Netzwerk wie etwa ein virtuelles privates Netzwerk, VPN, das Internet; ein Intranet; ein Extranet; ein öffentliches Telefonnetz, PSTN, ein öffentliches terrestrisches Mobilfunknetz, PLMN, ein Infrarot-Netzwerk, ein drahtloses Netzwerk wie etwa ein Netzwerk, das unter einem beliebigen der IEEE 802.11-Protokollsuite, des Bluetooth-Protokolls, anderen drahtlosen Protokollen arbeitet und/oder eine beliebige Kombination dieser und/oder anderer Netzwerke.

9. Verfahren nach Anspruch 1, wobei eine Schnittstelle zwischen dem Server und dem Client oder zwischen dem Server und dem gemeinsamen Datenspeicher und zwischen dem gemeinsamen Datenspeicher und dem Client zumindest einer der folgenden Schnittstellenmodi ist: eine grafische Benutzerschnittstelle, GUI, eine Sprachschnittstelle, eine textbasierte Schnittstelle oder eine handschriftbasierte Schnittstelle.

10. Verfahren nach Anspruch 1, wobei ein Schnittstellenmodus des Servers und/oder des Clients zur Ausführung auf zumindest einer der folgenden Vorrichtungen unterstützt wird: ein Mobiltelefon, ein persönlicher digitaler Assistent, PDA, oder eine Personal Computer, PC.

11. Client (130) zum Ausführen von zumindest einer ersten Anwendung (132) und einer zweiten Anwendung (240) und zum Verbinden mit einem Server (110), der ein Ausführen von zumindest einer ersten (212) und einer zweiten Instanz (213) einer Mehrbenutzeranwendung (211) unterstützt, wobei die erste Anwendung (132) ein Anbinden der ersten Instanz (212) unterstützt, wobei die erste Anwendung (132) mit der ersten Instanz (212) über eine Verbindung (152) verbunden werden kann, wobei die erste Instanz (212) auf Grundlage einer Aufforderung von einem Benutzer des Clients (130) über eine IP-Verbindung (151) oder einer Aufforderung von einer beliebigen Anwendung (132), die auf dem Client (130) ausgeführt wird, aufgefordert wurde, ausgeführt zu werden, wodurch die erste Anwendung (132) zu einem Teil der ersten Instanz (212) wird und die erste Instanz (212) auf dem Server (110) und auf dem Client (130) läuft, wobei der Client eine Client-Adresse (IP02) aufweist, wobei eine virtuelle Client-Funktion (261) innerhalb einer Server-Konfiguration (110) für die Mehrbenutzeranwendung (211) angewendet ist, und wobei ein gemeinsamer Datenspeicher (280) mit dem Server (110) und dem Client (130) verbunden ist, wobei auf den gemeinsamen Datenspeicher (280) durch die Mehrbenutzeranwendung (211) und durch die zweite Anwendung (240) zugegriffen werden kann, und wobei die erste Instanz (212) angeordnet ist, aus dem gemeinsamen Datenspeicher (280) zu lesen, wobei der Client Folgendes umfasst:
- eine virtuelle Server-Funktion (262), die innerhalb einer Client-Konfiguration (130) auf die zweite Anwendung (240) anwendbar ist, wobei
- die zweite Anwendung (240) für anfängliches Schreiben einer Adresse (281) in den gemeinsamen Datenspeicher (280) und nachfolgendes Warten auf einen Ruf von dem Server (110) über die virtuelle Server-Funktion (262) bestimmt ist und dazu in der Lage ist, wobei das Schreiben der Instanz (212) eine Aufforderung von der zweiten Anwendung (240), sich mit der geschriebenen Adresse (281) zu verbinden, zur Kenntnis bringt,
- wobei die Adresse (281) eine Kommunikationsanschlussadresse eines Kommunikationsanschlusses des Clients ist oder die Adresse (281) eine IP-Adresse (IP03) der zweiten Anwendung (240) ist und die zweite Anwendung nicht in der Lage ist, eine Verbindung mit der ersten Instanz (212) anzufordern,
- wobei die virtuelle Server-Funktion (262), die auf die zweite Anwendung (240) angewendet wird, für nachfolgendes Empfangen eines Rufs von der ersten Instanz (212) bestimmt ist und dazu in der Lage ist, wobei die virtuelle Client-Funktion (261) der ersten Instanz (212) die Adresse (281) aus dem gemeinsamen Datenspeicher (280) vor einem Aufrufen der Adresse (281) gelesen hat, wobei die virtuelle Client-Funktion (261) der ersten Instanz (212) angeordnet ist, um sich durch Aufrufen der Adresse (281) mit der virtuellen Server-Funktion (262) zu verbinden, und
- wobei das Empfangen des Rufs ein Herstellen einer Verbindung von der zweiten Anwendung (240), die auf dem Client (130) läuft, zu der ersten Instanz (212), die auf dem Server läuft, ermöglicht.

12. Server (110) zum Ausführen von zumindest einer ersten Instanz (212) und einer zweiten Instanz (213) einer Mehrbenutzeranwendung (211) und zum Verbinden mit einem Client (130), der ein Ausführen von zumindest einer ersten Anwendung (132) und einer zweiten Anwendung (240) unterstützt, wobei die erste Anwendung (132) ein Anbinden der ersten Instanz (212) unterstützt, und wobei die erste Anwendung (132) mit der ersten Instanz (212) über eine Verbindung (152) verbunden werden kann, wobei die erste Instanz (212) auf Grundlage einer Aufforderung von einem Benutzer des Clients (130) über eine IP-Verbindung (151) oder einer Aufforderung von einer beliebigen Anwendung (132), die auf dem Client (130) ausgeführt wird, aufgefordert wurde, ausgeführt zu werden, wodurch die erste Anwendung (132) zu einem Teil der ersten Instanz (212) wird und die erste Instanz (212) auf dem Server (110) und auf dem Client (130) läuft, wobei der Client eine Client-Adresse (IP02) aufweist, wobei ein gemeinsamer Datenspeicher (280) mit dem Server (110) und dem Client (130) verbunden werden kann, wobei auf den gemeinsamen Datenspeicher (280) durch die Mehrbenutzeranwendung (211) und durch die zweite Anwendung (240) zugegriffen werden kann, und wobei eine virtuelle Server-Funktion (262) innerhalb einer Client-Konfiguration (130) für die zweite Anwendung (240) angewendet wird, wobei der Server Folgendes umfasst:
- eine virtuelle Client-Funktion (261), die innerhalb einer Server-Konfiguration (110) auf die Mehrbenutzeranwendung (211) anwendbar ist, wobei
- die erste Instanz (212) zum Lesen einer Adresse (281) aus dem gemeinsamen Datenspeicher (280) angeordnet ist, wobei die Adresse (281) zuvor durch die zweite Anwendung (240) in den gemeinsamen Datenspeicher (280) geschrieben wurde, und wobei die Adresse (281) eine Kommunikationsanschlussadresse eines Kommunikationsanschlusses des Clients ist oder die Adresse (281) eine IP-Adresse (IP03) der zweiten Anwendung (240) ist, und wobei die zweite Anwendung (240) nicht in der Lage ist, eine Verbindung mit der ersten Instanz (212) anzufordern, und wobei das Schreiben der Adresse (281) der ersten Instanz (212) eine Aufforderung von der zweiten Anwendung (240), sich mit der geschriebenen Adresse (281) zu verbinden, zur Kenntnis bringt,
- wobei die virtuelle Client-Funktion (261) der ersten Instanz (212) für ein Verbinden mit der virtuellen Server-Funktion (262) durch Lesen und Aufrufen der Adresse (281) bestimmt ist und dazu in der Lage ist,
- wobei das Aufrufen der Adresse (281) eine Verbindung von der zweiten Anwendung (240), die auf dem Client (130) ausgeführt wird, zu der ersten Instanz (212), die auf dem Server ausgeführt wird, herstellt.

## Revendications

1. Procédé d'établissement d'une connexion entre un client (130) et un serveur (110), le serveur supportant l'exécution d'au moins une première instance (212) et une deuxième instance (213) d'une application multi-utilisateurs (211), et le client supportant l'exécution d'au moins une première application (132) et d'une deuxième application (240), dans lequel la première application (132) supporte l'interfaçage de la première instance (212), dans lequel la première application (132) est connectée à la première instance (212) via une connexion (152), et dans lequel un stockage de données commun (280) est connecté au serveur (110) et au client (130), où le stockage de données commun (280) est accessible pour l'application multi-utilisateurs (211) et pour la deuxième application (240), le procédé comprenant les étapes de :
- sur la base d'une requête en provenance d'un utilisateur du client (130) via une connexion IP (151) ou d'une requête en provenance d'une quelconque application (132) s'exécutant sur le client (130), requête à la première instance (212) de s'exécuter, moyennant quoi la première application (132) devient une partie de la première instance (212) et la première instance (212) s'exécute sur le serveur (110) et sur le client (130), le client possédant une adresse client (IP02),
- la deuxième application (240) écrivant une adresse (281) sur le stockage de données commun (280), dans lequel l'écriture rend la première instance (212) consciente d'une requête en provenance de la deuxième application (240) à se connecter à l'adresse écrite,
- ladite adresse (281) étant une adresse de port de communication d'un port de communication du client ou ladite adresse (281) étant une adresse IP (IP03) de la deuxième application (240), et la deuxième application (240) étant incapable de requérir la connexion à la première instance (212),
- agencement de la première instance (212) pour lire depuis le stockage de données commun (280),
- application d'une fonction de serveur virtuel (262) dans une configuration de client (130) à la deuxième application (240) et application d'une fonction de client virtuel (261) dans une configuration de serveur (110) à l'application multi-utilisateurs (211),
- la fonction de serveur virtuel (262) de la deuxième application (240) attendant un appel en provenance du serveur (110),
- la fonction de client virtuel (261) de la première instance (212) lisant l'adresse (281) depuis le stockage de données commun (280),
- la fonction de client virtuel (261) de la première instance (212) se connectant à la fonction de serveur virtuel (262) en appelant l'adresse (281),
- ledit appel par la première instance (212) établissant de la sorte une connexion entre la deuxième application (240) s'exécutant sur le client (130) et la première instance (212) s'exécutant sur le serveur.

2. Procédé selon la revendication 1, dans lequel la connexion étant établie entre la première instance (212) de l'application multi-utilisateurs et la deuxième application (240) permettant l'échange de données entre la première instance (212) et la deuxième application (240).

3. Procédé selon la revendication 1, dans lequel la première application (132) est incapable de communiquer une identité de la première instance (212) à la deuxième application (240).

4. Procédé selon la revendication 1, dans lequel le stockage de données est constitué d'au moins l'un parmi les supports de stockage de données suivants, éventuellement constitué de plus d'un parmi les supports de stockage de données suivants : un lecteur de disque, un dispositif de stockage optique, une mémoire flash, des dispositifs de stockage à l'état solide tels qu'une mémoire vive, RAM, ou une mémoire morte, ROM.

5. Procédé selon la revendication 1, dans lequel l'application multi-utilisateurs du serveur comprend au moins l'un parmi les systèmes d'exploitation suivants : diverses versions des systèmes d'exploitation Windows de Microsoft Corporation, diverses versions des systèmes d'exploitation Macintosh d'Apple Corporation, des ordinateurs de station de travail fonctionnant sur l'une quelconque d'une variété de systèmes d'exploitation de type UNIX ou UNIX disponibles dans le commerce, incluant la variété de systèmes d'exploitation GNU/Linux.

6. Procédé selon la revendication 1, dans lequel l'application multi-utilisateurs du serveur comprend au moins l'un parmi les applications multi-utilisateurs suivantes : un système de traitement de texte tel que Word, un système de tableur tel qu'Excel, une application de navigateur Internet tel qu'Explorer, un programme de présentation tel que PowerPoint.

7. Procédé selon la revendication 1, dans lequel une ou plusieurs des deuxièmes applications du client comprend au moins l'une parmi les applications suivantes : une application client, un navigateur Internet, une application de niveau intermédiaire, ou un système de gestion de base de données relationnelle, RDBMS.

8. Procédé selon la revendication 1, dans lequel un réseau de communication entre le serveur et le client, ou entre le serveur et le stockage de données commun et entre le stockage de données commun et le client est au moins l'un parmi les réseaux suivants : un réseau local, LAN, tel qu'un réseau Ethernet, un réseau Token-Ring ; un réseau étendu WAN ; un réseau virtuel tel qu'un réseau privé virtuel, VPN, l'Internet ; un intranet ; un extranet ; un réseau téléphonique public commuté, PSTN, un réseau mobile terrestre public, PLMN, un réseau infra-rouge, un réseau sans fil tel qu'un réseau fonctionnant sous l'un quelconque de la suite de protocoles IEEE 802.11, le protocole Bluetooth, d'autres protocoles sans fil, et/ou une quelconque combinaison de ceux-ci et/ou d'autres réseaux.

9. Procédé selon la revendication 1, dans lequel une interface entre le serveur et le client ou entre le serveur et le stockage de données commun et entre le stockage de données commun et le client est au moins l'un parmi les modes d'interface suivants : une interface utilisateur graphique, GUI, une interface vocale, une interface de texte ou une interface d'écriture manuscrite.

10. Procédé selon la revendication 1, dans lequel un mode d'interface du serveur et/ou du client est supporté pour exécution sur au moins l'un parmi les dispositifs suivants : un téléphone portable, un assistant numérique personnel, PDA, ou un ordinateur personnel, PC.

11. Client (130) destiné à exécuter au moins une première application (132) et une deuxième application (240) et à se connecter à un serveur (110) supportant l'exécution d'au moins une première (212) et une deuxième instance (213) d'une application multi-utilisateurs (211), dans lequel la première application (132) supporte l'interface de la première instance (212), dans lequel la première application (132) est connectable à la première instance (212) via une connexion (152), dans lequel la première instance (212) a reçu la requête de s'exécuter sur la base d'une requête en provenance d'un utilisateur du client (130) via une connexion IP (151) ou d'une requête en provenance d'une quelconque application (132) s'exécutant sur le client (130), moyennant quoi la première application (132) devient une partie de la première instance (212) et la première instance (212) s'exécute sur le serveur (110) et sur le client (130), le client ayant une adresse client (IP02), dans lequel une fonction de client virtuel (261) est appliquée dans une configuration de serveur (110) à l'application multi-utilisateurs (211), et dans lequel un stockage de données commun (280) est connecté au serveur (110) et au client (130), où le stockage de données commun (280) est accessible pour l'application multi-utilisateurs (211) et pour la deuxième application (240), et dans lequel la première instance (212) est agencée pour lire depuis le stockage de données commun (280), ledit client comprenant
- une fonction de serveur virtuel (262) applicable dans une configuration de client (130) à la deuxième application (240), dans lequel
- la deuxième application (240) est destinée à et capable d'écrire initialement une adresse (281) sur le stockage de données commun (280) et d'attendre par la suite un appel en provenance du serveur (110) via la fonction de serveur virtuel (262), dans lequel l'écriture rend l'instance (212) consciente d'une requête en provenance de la deuxième application (240) à se connecter à l'adresse écrite (281),
- ladite adresse (281) est une adresse de port de communication d'un port de communication du client ou ladite adresse (281) étant une adresse IP (IP03) de la deuxième application (240), et la deuxième application étant incapable de requérir une connexion à la première instance (212),
- ladite fonction de serveur virtuelle (262) appliquée à la deuxième application (240) destinée à et capable de recevoir par la suite un appel en provenance de la première instance (212), ladite fonction de client virtuel (261) de la première instance (212) ayant lu l'adresse (281) depuis le stockage de données commun (280) avant d'appeler l'adresse (281), où la fonction de client virtuel (261) de la première instance (212) est agencée pour se connecter à la fonction de serveur virtuel (262) en appelant l'adresse (281), et
- ladite réception de l'appel permettant l'établissement d'une connexion depuis la deuxième application (240), s'exécutant sur le client (130), sur la première instance (212), s'exécutant sur le serveur.

12. Serveur (110) destiné à exécuter au moins une première instance (212) et une deuxième instance (213) d'une application multi-utilisateurs (211) et à se connecter à un client (130) supportant l'exécution d'au moins une première application (132) et une deuxième application (240), dans lequel la première application (132) supporte l'interfaçage de la première instance (212), et dans lequel la première application (132) est connectable à la première instance (212) via une connexion (152), dans lequel la première instance (212) a reçu la requête de s'exécuter sur la base d'une requête en provenance d'un utilisateur du client (130) via une connexion IP (151) ou d'une requête en provenance d'une quelconque application (132) s'exécutant sur le client (130), moyennant quoi la première application (132) devient une partie de la première instance (212) et la première instance (212) s'exécute sur le serveur (110) et sur le client (130), le client possédant une adresse client (IP02), dans lequel un stockage de données commun (280) est connectable au serveur (110) et au client (130), où le stockage de données commun (280) est accessible pour l'application multi-utilisateurs (211) et pour la deuxième application (240) et dans lequel une fonction de serveur virtuel (262) est appliquée dans une configuration de client (130) à la deuxième application (240), ledit serveur comprenant
- une fonction de client virtuel (261) applicable dans une configuration de serveur (110) à l'application multi-utilisateurs (211), dans lequel
- la première instance (212) est agencée pour lire une adresse (281) depuis le stockage de données commun (280), ladite adresse (281) ayant préalablement été écrite sur le stockage de données commun (280) par la deuxième application (240), et ladite adresse (281) étant une adresse de port de communication d'un port de communication du client ou ladite adresse (281) étant une adresse IP (IP03) de la deuxième application (240), et la deuxième application (240) étant incapable de requérir une connexion à la première instance (212), et dans lequel l'écriture de ladite adresse (281) rend la première instance (212) consciente d'une requête en provenance de la deuxième application (240) à se connecter à l'adresse écrite (281),
- ladite fonction de client virtuel (261) de la première instance (212) est destinée à et capable de se connecter à la fonction de serveur virtuel (262) en lisant et en appelant l'adresse (281), et
- ledit appel de l'adresse (281) établissant une connexion depuis la deuxième application (240) s'exécutant sur le client (130) à la première instance (212) s'exécutant sur le serveur.
